# EUROPEAN PATENT SPECIFICATION

(11) **EP 3 889 646 B1**
(45) Date of publication and mention of the grant of the patent: **25.06.2025**
(21) Application number: 19890797.4
(22) Date of filing: 18.11.2019
(51) Int. Cl.: G01S 17/89, G01S 7/48, G01S 17/931, G01S 7/481, G08G 1/015, G06V 20/58, G06N 3/08

(54) **ON-VEHICLE OBJECT IDENTIFICATION SYSTEM, AUTOMOBILE, VEHICLE LAMP, CLASSIFIER LEARNING METHOD, AND ARITHMETIC OPERATION DEVICE**
FAHRZEUGINTERNES OBJEKTIDENTIFIZIERUNGSSYSTEM, KRAFTFAHRZEUG, FAHRZEUGLAMPE, KLASSIFIKATORLERNVERFAHREN UND RECHENOPERATIONSVORRICHTUNG
SYSTÈME D'IDENTIFICATION D'OBJET EMBARQUÉ, AUTOMOBILE, LAMPE DE VÉHICULE, PROCÉDÉ D'APPRENTISSAGE DE CLASSIFICATEUR ET DISPOSITIF D'OPÉRATION ARITHMÉTIQUE

(30) Priority: 30.11.2018 JP 2018225762
(43) Date of publication of application: 06.10.2021
(73) Proprietor: KOITO MANUFACTURING CO., LTD., Minato-ku Tokyo 108-8711 (JP)
(72) Inventor: NAGASHIMA, Toru, Shizuoka-shi Shizuoka 424-8764 (JP)
(74) Representative: Algemeen Octrooi- en Merkenbureau B.V.
(86) International application number: PCT/JP2019/045095
(87) International publication number: WO 2020/110802

(56) References cited:
- WO-A1-2017/157967
- WO-A1-2018/173819
- CN-A- 106 291 506
- CN-A- 106 295 586
- JP-A- 2002 236 178
- JP-A- 2015 152 319
- JP-A- 2016 206 026
- JP-A- H1 138 141
- US-A1- 2017 220 876
- NAGASHIMA TORU ET AL: "Object classification integrating estimation of each scan line with LiDAR", 2017 IEEE 6TH GLOBAL CONFERENCE ON CONSUMER ELECTRONICS (GCCE), IEEE, 24 October 2017 (2017-10-24), pages 1 - 4, XP033286998, DOI: 10.1109/GCCE.2017.8229393

## Description

### [TECHNICAL FIELD]

The present invention relates to an object identification system.

### [BACKGROUND ART]

Candidates of vehicle sensors include Light Detection and Ranging, Laser Imaging Detection and Ranging (LiDAR), cameras, millimeter-wave radars, ultrasonic sonars, and so forth. In particular, LiDAR has advantages as compared with other sensors. Examples of such advantages include: (i) an advantage of being capable of identifying an object based on point group data; (ii) an advantage in employing active sensing of providing high-precision detection even in bad weather conditions; (iii) an advantage of providing wide-range measurement; etc. Accordingly, LiDAR is anticipated to become mainstream in vehicle sensing systems.

### [Related Art Documents]

### [Patent Documents]

[Patent document 1]
   Japanese Patent Application Laid Open No. 2017-56935
[Patent document 2]
   Japanese Patent Application Laid Open No. 2009-98023
[Patent document 3]
   Toru Nagashima et al "Object classification integrating estimation of each scan line with LiDAR", 2017 IEEE 6th Global conference on Consumer Electronics, IEEE, 24 October 2017, page 1-4 discloses object detection with few scan lines.
[Patent document 4]
   CN106295586A discloses human shape target identification based on single line point cloud data machine learning.
[Patent document 5]
   CN106291506A discloses a vehicle target recognition technique based on single line point cloud data machine learning.
[Patent document 6]
   JP2002-236178A relates to extending the maximum detection distance without enlarging an object detection device.

### [DISCLOSURE OF THE INVENTION]

### [PROBLEM TO BE SOLVED BY THE INVENTION]

The precision of object identification based on the point group data generated by the LiDAR increases according to an increase in the resolution of the point group data. However, this involves a drastic increase in calculation costs. In consideration of a case in which the LiDAR is mounted on a vehicle, in some cases, it may be necessary to mount a low-cost, low-end processing device. In this case, such an arrangement naturally requires the number of scan lines to be reduced.

The present invention has been made in view of such a situation. Accordingly, it is an exemplary purpose of an embodiment of the present invention to provide a system, apparatus, and method that are capable of identifying an object using only a small number of horizontal lines.

### [MEANS TO SOLVE THE PROBLEM]

The invention is set out in the appended set of claims.

### [ADVANTAGE OF THE PRESENT INVENTION]

With the present invention, an object can be identified based on point cloud data that corresponds to a single scan line. Furthermore, this allows improvement in the efficiency of machine learning.

### [BRIEF DESCRIPTION OF THE DRAWINGS]

Fig. 1 is a block diagram showing an object identification system according to an embodiment;
Fig. 2 is a block diagram showing an example configuration of a classifier;
Fig. 3 is a block diagram showing a learning system according to an embodiment;
Figs. 4A through 4D are diagrams respectively showing multiple items of point cloud data for a pedestrian, bicycle, automobile, and utility pole acquired by means of a distance sensor;
Fig. 5 is a flowchart of learning by means of a learning system;
Fig. 6 is a diagram showing a distance sensor according to an embodiment;
Fig. 7 is a block diagram showing an automobile provided with the object identification system; and
Fig. 8 is an automotive lamp provided with the object identification system.

### [BEST MODE FOR CARRYING OUT THE INVENTION]

### OVERVIEW OF THE EMBODIMENTS

An embodiment disclosed in the present specification relates to a vehicular object identification system. The vehicular object identification system includes: a distance sensor structured to scan a single beam in the horizontal direction so as to measure the distances to points on the surface of an object; and a processing device including a classifier structured to be capable of identifying the kind of the object based on point cloud data that corresponds to a single scan line acquired by the distance sensor. The classifier is implemented based on a learned model generated by machine learning. The machine learning is executed using multiple items of point cloud data that correspond to multiple scan lines obtained by measuring a predetermined object by means of a LiDAR (Light Detection and Ranging) including the multiple scan lines in the vertical direction.

The object identification system allows the kind of an object to be judged using a single scan line. In a case in which the same distance sensor as that to be used in the object identification system is used in learning, in a case in which there is a difference between the height at which the distance sensor is used in learning and the height at which the distance sensor is mounted on the vehicle, such an arrangement has the potential to cause degradation in the object recognition rate. In order to solve this problem, with an arrangement in which training data is acquired while changing the height at which the distance sensor is set for training data acquisition, such an arrangement has a problem of an increased cost for data acquisition. In order to solve such a problem, a LiDAR that supports multiple scan lines and which differs from the distance sensor mounted on the vehicle is used in learning. Specifically, the multiple scan lines are each associated with the single scan line of the distance sensor so as to provide the training data, thereby providing improvement in the efficiency of data acquisition. In addition, the point cloud data that corresponds to the scan lines arranged at different heights is employed as the training data. This allows an object to be identified independent of the height of an emitted beam from the distance sensor.

Also, the distance sensor may include: a light source; a scanning device including a motor and a mirror attached to the motor and structured to reflect emitted light of the light source, in which the scanning device is structured such that probe light, which is light reflected by the mirror, can be scanned according to the rotation of the motor; a photosensor structured to detect return light, which is the probe light reflected from a point on an object; and a processor structured to detect the distance to the point on the object based on the output of the photosensor. With such a distance sensor, the scanning device is configured as a combination of a commonplace motor and mirrors arranged in a fan structure. This provides the distance sensor with a lower cost.

### EMBODIMENTS

Description will be made below regarding the present invention based on preferred embodiments with reference to the drawings. The same or similar components, members, and processes are denoted by the same reference numerals, and redundant description thereof will be omitted as appropriate. The embodiments have been described for exemplary purposes only, and are by no means intended to restrict the present invention. Also, it is not necessarily essential for the present invention that all the features or a combination thereof be provided as described in the embodiments.

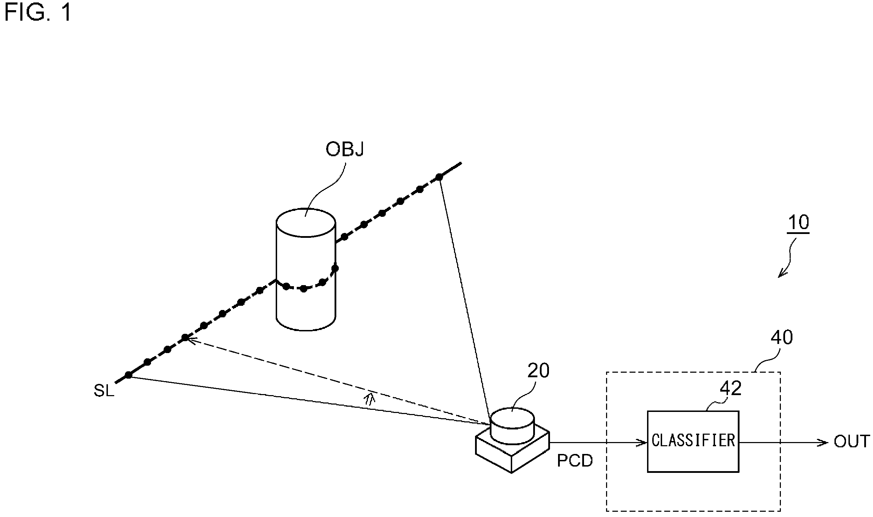

Fig. 1 is a block diagram showing an object identification system 10 according to an embodiment. The object identification system 10 is mounted on a vehicle such as an automobile, motorcycle, or the like. The object identification system 10 judges the kind (category) of an object OBJ that is present in the surroundings of the vehicle.

The object identification system 10 mainly includes a distance sensor 20 and a processing device 40. The distance sensor 20 scans a single beam in the horizontal direction so as to measure the distances to points P on the surface of the object OBJ. The distance sensor 20 generates a single item of point group data PCD that corresponds to a single scan line SL.

Each item of point cloud data PCD includes the distance information to multiple sampling points P along the scan line SL. The distance sensor 20 is not restricted in particular. However, in a case in which there is a need to identify an object with small irregularities, such as a pedestrian, with high precision, a LiDAR is preferably employed. It should be noted that typical LiDARs support multiple scan lines in the vertical direction. In contrast, the object identification system 10 according to the present embodiment supports only a single scan line.

The processing device 40 includes a classifier 42 that is capable of classifying the kind of the object OBJ based on a single item of point cloud data PCD that corresponds to a single scan line SL acquired by the distance sensor 20. The classifier 42 is structured using machine learning as described later. The data format of the point group data PCD is not restricted in particular. The data format of the point cloud data PCD may be a rectangular coordinate system or a polar coordinate system.

The processing device 40 outputs output data OUT that indicates the kind of the object OBJ. Also, the output data OUT may indicate the probability with which the object OBJ included in the point cloud data PCD matches each of multiple categories. It should be noted that the present invention is not restricted to such an arrangement. Examples of such kinds (categories) of the object include a pedestrian, bicycle, automobile, utility pole, etc. Regarding a pedestrian, a pedestrian as viewed from the front, a pedestrian as viewed from the rear, and a pedestrian as viewed from the side may be classified and defined as the same kind of object. The same can be said of an automobile and a bicycle. In the present embodiment, this definition is employed.

The processing device 40 may be provided as a combination of a processor (hardware component) such as a Central Processing Unit (CPU), Graphics Processing Unit (GPU), microcontroller, or the like, and a software program to be executed by the processor (hardware component). The processing device 40 may be configured as a combination of multiple processors.

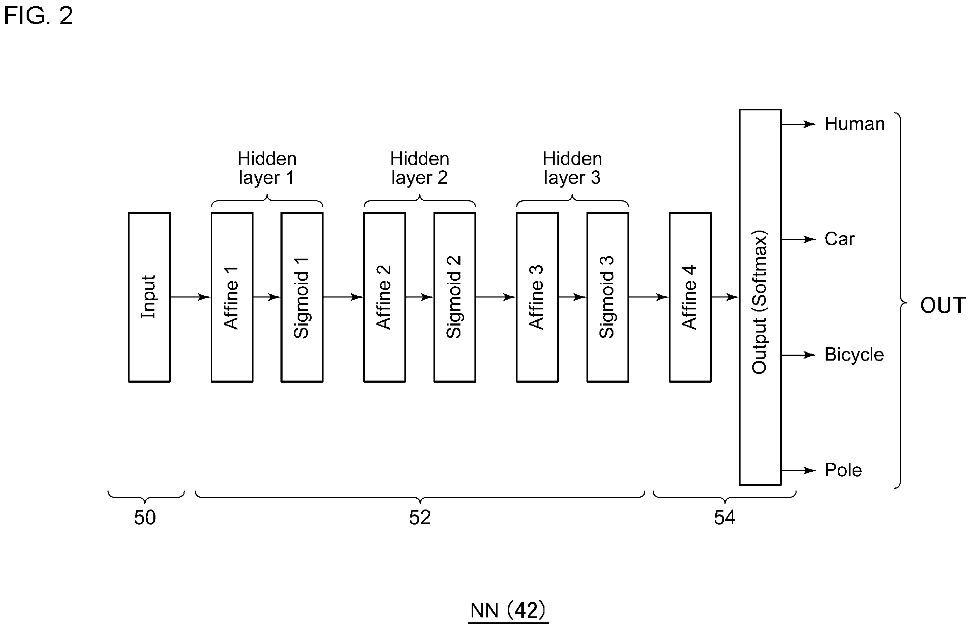

Fig. 2 is a block diagram showing an example configuration of the classifier 42. The classifier 42 may be configured employing a neural network NN. The neural network NN is configured including an input layer 50, three intermediate layers (hidden layers) 52, and an output layer 54.

The number of units of the input layer 50 is determined according to the number of sample points for each line, which is designed to be 5,200. There are three intermediate layers with the number of units designed to be 200, 100, and 50, respectively. In the intermediate layers 52, affine transformation and transformation using a sigmoid function are performed. In the output layer 54, probability calculation is performed using affine transformation and a softmax function.

The output layer 54 may be designed to support multiple categories (e.g., four categories: pedestrian (Human), automobile (Car), bicycle (Bicycle), and utility pole (Pole)). In this case, the output data OUT may include four items of data, i.e., Human, Car, Bicycle, and Pole, each indicating the probability that the object OBJ matches the corresponding category.

As the preprocessing for the neural network NN, extraction, shifting, and normalization are preferably performed.

Extraction is processing for removing the background so as to extract the object OBJ. Shifting is data shifting processing for shifting the object such that it is positioned at the center. Normalization is processing for dividing the distance data by a predetermined value. For example, as the predetermined value, the distance (reference distance) between the distance sensor 20 and a predetermined portion of the object OBJ at the time of the learning may be employed. This processing normalizes the value of the point cloud data such that it becomes a value in the vicinity of 1.

The above is the basic configuration of the object identification system 10. With the object identification system 10, the kind of the object OBJ can be judged using a single scan line. As the number of scan lines becomes larger, the amount of calculation performed by the processing device becomes enormous. Such an arrangement requires a high-speed processor. With the present embodiment, this arrangement requires processing for only a single scan line of point cloud data, thereby allowing the amount of calculation to be reduced. This means that the processing device 40 can be configured as a low-cost microcontroller. This allows the object identification system 10 to be provided with a lower cost.

### REGARDING LEARNING

Next, description will be made regarding learning of the classifier 42. In a case in which the same sensor as that employed in the object identification system 10, i.e., the distance sensor 20, is used in the learning of the classifier 42, and in a case in which there is a difference in height between the distance sensor used in the learning and the distance sensor when it is mounted on the vehicle, such an arrangement has the potential to cause a problem of degradation in the object recognition rate.

In order to solve this problem, an approach is conceivable in which, in the learning, training data (which is also referred to as "learning data") is acquired while changing the height (or elevation/depression angle) of the distance sensor so as to change the height of the scan line. However, such an approach has a problem of an increased cost of data acquisition.

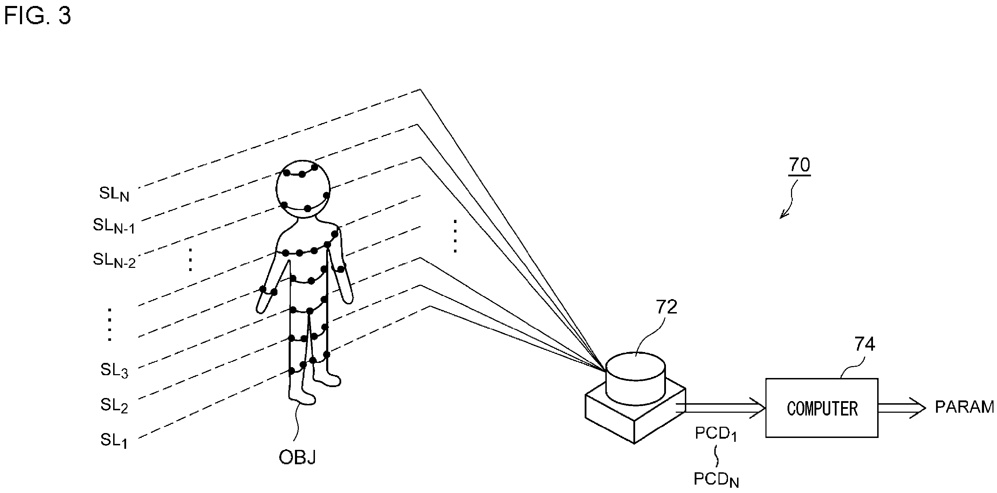

In order to solve such a problem, with the present embodiment, training data is acquired by means of a LiDAR that supports multiple scan lines, which differs from the distance sensor 20 mounted on the vehicle. Fig. 3 is a block diagram showing a learning system according to an embodiment.

A learning system 70 includes a LiDAR 72 and a computer 74. In the learning, a LiDAR (Light Detection and Ranging) 72 that supports multiple scan lines SL₁ through SL_{N} in the vertical direction is used. Fig. 3 shows an example in which there is a pedestrian (human) as the object OBJ. The LiDAR 72 generates multiple items of point cloud data PCD₁ through PCD_{N} that correspond to the multiple scan lines. For example, the number of lines N supported by the LiDAR to be employed for the learning is preferably on the order of eight.

Fig. 3 shows an example in which the pedestrian and the LiDAR 72 are positioned such that they face each other. However, it is preferable to acquire multiple items of point cloud data PCD₁ through PCD_{N} for the pedestrian from multiple different directions while changing the orientation of the pedestrian.

The multiple items of point cloud data PCD₁ through PCD_{N} are input to the computer 74. The computer 74 performs machine learning with the multiple items of point cloud data PCD₁ through PCD_{N} as the training data so as to allow a given object (a pedestrian in this example) to be identified. With this, the object identification system 10 shown in Fig. 1 is capable of judging the kind of the object based on the point cloud data that corresponds to a single scan line.

It should be noted that all the items of point cloud data PCD₁ through PCD_{N} that correspond to the multiple scan lines SL₁ through SL_{N} are not necessarily required to be used as the training data. Also, only a part of the point cloud data, which corresponds to the multiple scan lines except for both ends of the scan lines (or except for the top scan line or bottom scan line) may be employed as the training data.

In a case in which the object identification system 10 is to be designed to be capable of identifying multiple kinds of objects, multiple sets of point cloud data may preferably be acquired by means of the LiDAR 72 while changing the kind of the object OBJ.

Finally, the classifier 42 of the object identification system 10 is implemented based on a learned model (trained model) generated by machine learning.

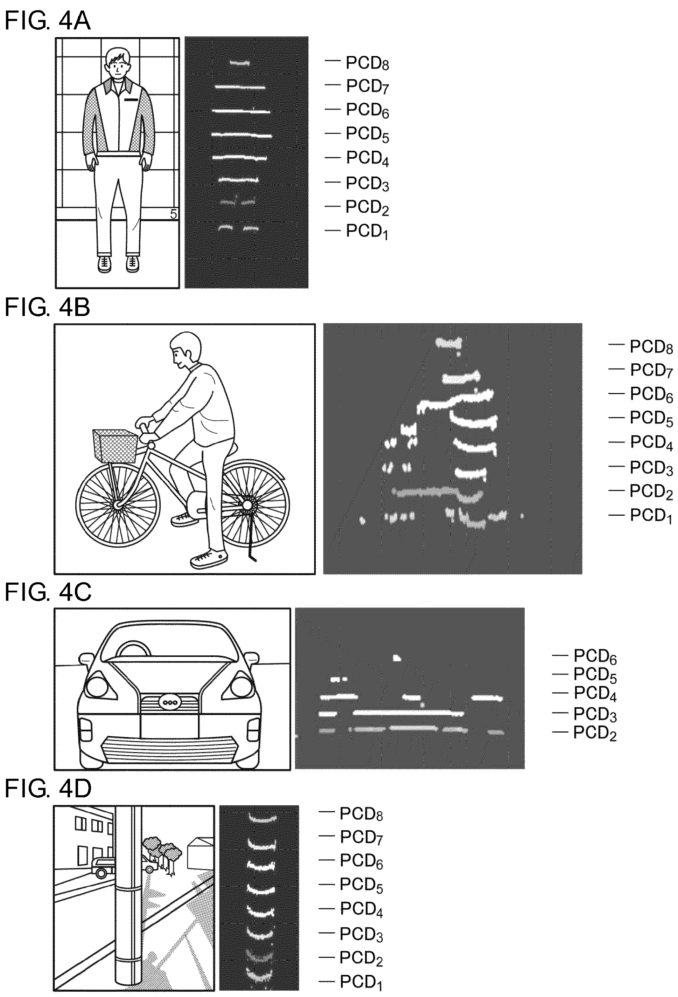

Figs. 4A through 4D are diagrams showing multiple items of point cloud data PCD₁ through PCD₈ respectively acquired by means of the distance sensor 20 for a pedestrian, bicycle, automobile, and utility pole. Upon receiving the point cloud data PCDᵢ that corresponds to any one from among the scan lines SLᵢ (i = 1 through 8), the classifier 42 implemented based on the learned model generated by the machine learning described above is capable of judging which one from among the multiple categories matches the point cloud data PCDᵢ with a high probability.

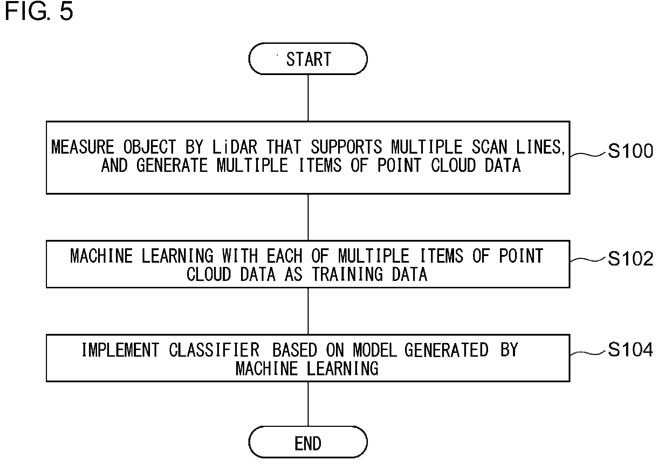

Fig. 5 is a flowchart showing the learning by the learning system 70. At least one predetermined object is measured using the LiDAR 72 that supports multipole scan lines in the vertical direction, and that differs from the distance sensor 20 (S100). With this, multiple items of point cloud data PCD₁ through PCD_{N} that correspond to the multiple scan lines are generated for each object.

Subsequently, machine learning is performed with each of the multiple items of point cloud data PCD₁ through PCD_{N} as training data so as to allow a given object to be identified (S102). Subsequently, the classifier 42 is implemented based on a learned model generated by machine learning (S104).

The above is a description of the learning system 70 and the learning method. With the learning system 70 or the learning method, the multiple scan lines SL₁ through SL_{N} of the LiDAR 72 are each associated with a single scan line of the distance sensor. This provides efficient data acquisition.

Furthermore, learning is performed using point cloud data acquired by scan lines having different heights. This enables object recognition independent of the height of the emitted beam of the distance sensor 20. That is to say, this means that the restriction on the height at which the distance sensor 20 is mounted on a vehicle is relaxed. Furthermore, this means that such an arrangement provides improved tolerance for pitching of a vehicle while traveling.

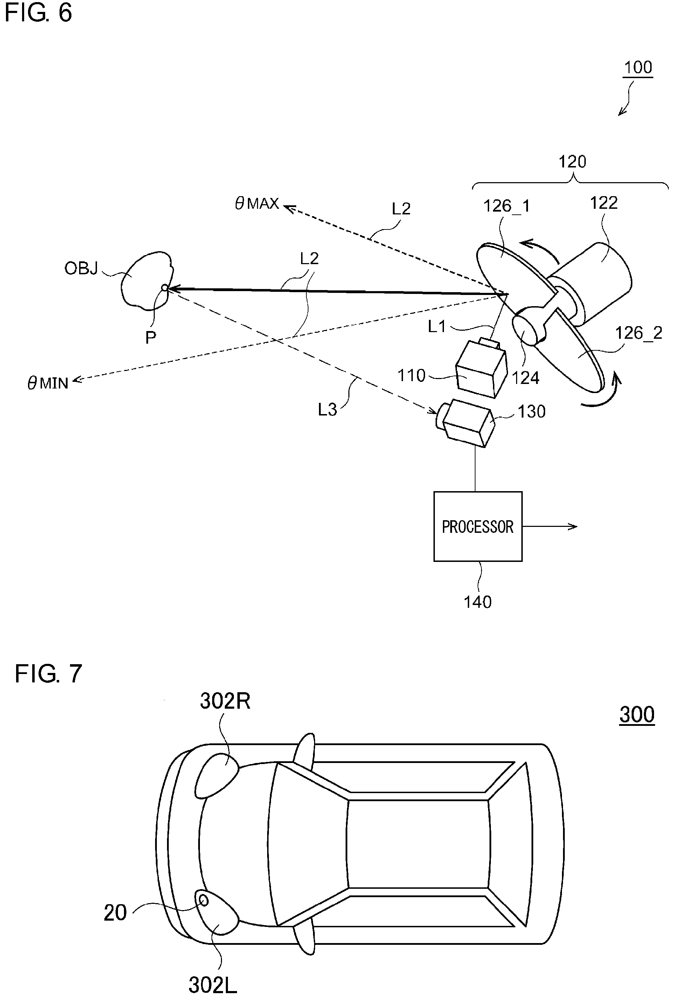

Next, description will be made regarding an example configuration of the distance sensor 20. Fig. 6 is a block diagram showing a distance sensor 100 according to an embodiment. The distance sensor 100 includes a light source 110, a scanning device 120, a photosensor 130, and a processor 140. The light source 110 emits light L1 having an infrared spectrum, for example. The emitted light L1 of the light source 110 may be modulated with respect to time.

The scanning device 120 includes a motor 122 and one or multiple mirrors (which will be also referred to as "blades") 126. The mirrors 126 are configured to have a fan structure. The mirrors 126 are attached to a rotational shaft 124 of the motor 122 such that they reflect the emitted light L1 of the light source 110. The emission angle (which will also be referred to as a "scan angle") θ of probe light L2, which is light reflected from the mirrors 126, changes according to the positions of the mirrors 126 (i.e., rotational angle ϕ of the motor). Accordingly, by rotationally driving the motor 122, the probe light L2 can be scanned in the θ direction ranging between θ_{MIN} and θ_{MAX}. It should be noted that, in a case in which the number of mirrors 126 thus provided is two, one half-rotation of the motor 122 (mechanical angle of 180 degrees) corresponds to a single scan. Accordingly, the probe light L2 is scanned twice every time the motor 122 is rotated once. It should be noted that the number of the mirrors 126 is not restricted in particular.

The rotational angle ϕ of the motor 122 can be detected by means of a position detection mechanism such as a Hall sensor, optical encoder, or the like. Accordingly, the scan angle θ at each time point can be obtained based on the rotational angle ϕ. In a case in which a stepping motor is employed as the motor 122, the rotational angle ϕ can be controlled by an open-loop control operation, thereby allowing the position detection mechanism to be omitted.

The photosensor 130 detects return light L3 which is the probe light L2 reflected at a point P on an object OBJ. The processor 140 detects the distance to the point P on the object OBJ based on the output of the photosensor 130. The distance detection method or algorithm is not restricted in particular. Rather, known techniques may be employed. For example, the delay time from the emission of the probe light L2 to the reception of the return light by means of the photosensor 130, i.e., the time of flight (TOF), may be measured so as to acquire the distance.

The above is the basic configuration of the distance sensor 100. Next, description will be made regarding the operation thereof. The motor 122 is rotationally driven so as to change the scan angle θ of the probe light L2 in the order of θ₁, θ₂, .... In this operation, the distance rᵢ to the point Pᵢ on the surface of the object OBJ is measured at each scan angle θᵢ (i = 1, 2, ...). With this, data pairs (point cloud data) each configured as a pair of the scan angle θᵢ and the corresponding distance rᵢ, can be acquired.

With such a distance sensor 100, the scanning device 120 can be configured as a combination of the motor 122 configured as a commonplace motor and the mirrors 126 arranged in a fan structure. This provides the distance sensor 100 with a lower cost.

Fig. 7 is a block diagram showing an automobile provided with the object identification system 10. An automobile 300 is provided with headlamps 302L and 302R. At least one from among the headlamps 302L and 302R is provided with the object identification system 10 as a built-in component. Each headlamp 302 is positioned at a frontmost end of the vehicle body, which is most advantageous as a position where the distance sensor 100 is to be installed for detecting an object in the vicinity.

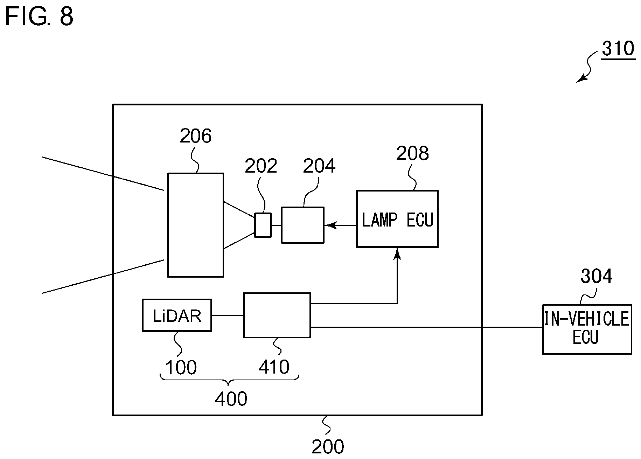

Fig. 8 is a block diagram showing an automotive lamp 200 including the object detection system 400. The automotive lamp 200 forms a lamp system 310 together with an in-vehicle ECU 304. The automotive lamp 200 includes a light source 202, a lighting circuit 204, and an optical system 206. Furthermore, the automotive lamp 200 is provided with the object detection system 400. The object detection system 400 corresponds to the above-described object identification system 10, and includes the distance sensor 100 and a processing device 410. The distance sensor 100 corresponds to the distance sensor 20 shown in Fig. 2. The processing device 410 judges the presence or absence and the kind of an object OBJ in front of the vehicle based on point cloud data acquired by the distance sensor 100. The processing device 410 may include an identifying device obtained by machine learning. The processing device 410 corresponds to the processing device 40 shown in Fig. 2.

Also, the information with respect to the object OBJ detected by the processing device 410 may be used to support the light distribution control operation of the automotive lamp 200. Specifically, a lamp ECU 208 generates a suitable light distribution pattern based on the information with respect to the kind of the object OBJ and the position thereof generated by the processing device 410. The lighting circuit 204 and the optical system 206 operate so as to provide the light distribution pattern generated by the lamp ECU 208.

Also, the information with respect to the object OBJ detected by the processing device 410 may be transmitted to the in-vehicle ECU 304. The in-vehicle ECU may support autonomous driving based on the information thus transmitted.

Description has been made above regarding the present invention with reference to the embodiments. The above-described embodiments have been described for exemplary purposes only, and are by no means intended to be interpreted restrictively. Rather, it can be readily conceived by those skilled in this art that various modifications may be made by making various combinations of the aforementioned components or processes, which are also encompassed in the technical scope of the present invention. Description will be made below regarding such modifications.

In an embodiment, the object may be defined as a different kind (category) for each orientation as viewed from the user's vehicle. That is to say, the same object is identified as a different kind according to the orientation thereof, e.g., whether or not the object is positioned with a face-to-face orientation with respect to the user's vehicle. This is because such identification is advantageous in estimating the object OBJ moving direction.

The processing device 40 may be configured of only a hardware component using an FPGA or the like.

Description has been made regarding the present invention with reference to the embodiments using specific terms. However, the above-described embodiments show only an aspect of the mechanisms and applications of the present invention. Rather, various modifications and various changes in the layout can be made without departing from the scope of the present invention as defined in appended claims.

### [INDUSTRIAL APPLICABILITY]

The present invention relates to an object identification system.

### [DESCRIPTION OF THE REFERENCE NUMERALS]

10 object identification system, 20 distance sensor, 40 processing device, 42 classifier, 50 input layer, 52 intermediate layer, 54 output layer, 70 learning system, 72 LiDAR, 74 computer, 100 distance sensor, 110 light source, 120 scanning device, 122 motor, 124 rotational shaft, 126 mirror, 130 photosensor, 140 processor, 200 automotive lamp, 202 light source, 204 lighting circuit, 206 optical system, 300 automobile, 302 headlamp, 304 in-vehicle ECU, 310 lamp system, vehicle ECU, 310 lamp system, 400 object detection system, 410 processing device.

## Claims

1. An object identification system (10) for being mounted on a vehicle comprising:
a distance sensor (20) structured to scan a single beam in a horizontal direction so as to measure distances to points on a surface of an object (OBJ) and to generate a single item of point cloud data, PCD, that corresponds to a single scan line; and
a processing device (40) comprising a classifier (42) structured to identify a kind of the object (OBJ) based on the single item of point cloud data that corresponds to the single scan line generated by the distance sensor (20),
wherein the classifier (42) is implemented based on a learned model generated by machine learning,
and wherein the machine learning is executed using a plurality of items of point cloud data that correspond to a plurality of scan lines obtained by measuring a predetermined object by means of a Light Detection and Ranging, LiDAR (72),
supporting a plurality of scan lines having different heights, the LiDAR being different from the distance sensor (20).

2. The object identification system (10) according to claim 1, wherein the distance sensor (20,100) comprises:
a light source (110);
a scanning device (120) comprising a motor (122) and a mirror (126) attached to the motor (122) and structured to reflect emitted light of the light source (110), wherein the scanning device (120) is structured such that probe light(L2), which is light reflected by the mirror, can be scanned according to a rotation of the motor(122);
a photosensor (130) structured to detect return light (L3), which is the probe light (L2) reflected from a point (P) on an object (OBJ); and
a processor (140) structured to detect a distance to the point (P) on the object (OBJ) based on an output of the photosensor (130).

3. The object identification system (10) according to claim 1 or 2, wherein the classifier (42) comprises a neural network.

4. An automobile (300) comprising the object identification system (10) according to any one of claims 1 through 3.

5. An automobile (300) according to claim 4, wherein the distance sensor (20) is built into a headlamp (302).

6. An automotive lamp (200) comprising the object identification system (400) according to any one of claims 1 through 3.

7. A method for a classifier structured to identify a kind of an object based on a single item of point cloud data that corresponds to a single scan line acquired by a distance sensor,
wherein the method comprises:
measuring a predetermined object using a Light Detection and Ranging, LiDAR, structured as a component that differs from the distance sensor, and structured to support a plurality of scan lines having different heights;
executing machine learning with a plurality of items of point cloud data that correspond to the plurality of scan lines as training data, so as to allow the object to be identified; and
implementing the classifier based on a learned model generated by the machine learning.

8. A processing device (40) for the object identification system (10) of any of previous claims 1-3 comprising a classifier (42) structured to receive the single item of point cloud data that corresponds to the single scan line acquired by the distance sensor (20),
wherein the classifier (42) is implemented based on a learned model generated by machine learning,
and wherein the machine learning is executed using a plurality of items of point cloud data that correspond to a plurality of scan lines obtained by measuring a predetermined object by means of a Light Detection and Ranging, LiDAR, that supports a plurality of scan lines having different heights, the LiDAR being different from the distance sensor (20).

## Patentansprüche

1. Objektidentifikationssystem (10) zum Montieren an einem Fahrzeug, das Folgendes umfasst:
einen Abstandssensor (20), der dazu strukturiert ist, einen einzelnen Strahl in einer horizontalen Richtung abzutasten, um Abstände zu Punkten auf einer Oberfläche eines Objekts (OBJ) zu messen, und ein einzelnes Element aus Punktwolkendaten, PCD, zu erzeugen, das einer einzelnen Abtastlinie entspricht; und
eine Verarbeitungsvorrichtung (40), die einen Klassifizierer (42) umfasst, der dazu strukturiert ist, eine Art des Objekts (OBJ) basierend auf dem einzelnen Element aus Punktwolkendaten zu identifizieren, das der einzelnen Abtastlinie entspricht, die durch den Abstandssensor (20) erzeugt wurde,
wobei der Klassifizierer (42) basierend auf einem durch maschinelles Lernen erzeugten gelernten Modell implementiert wird,
und wobei das maschinelle Lernen unter Verwendung mehrerer Elemente aus Punktwolkendaten ausgeführt wird, die mehreren Abtastlinien entsprechen, die durch Messen eines vorbestimmten Objekts mittels einer Lichtdetektion und Entfernungsmessung, LiDAR (72), erhalten wurden, die mehrere Abtastlinien mit unterschiedlichen Höhen unterstützt, wobei sich die LiDAR von dem Abstandssensor (20) unterscheidet.

2. Objektidentifikationssystem (10) nach Anspruch 1, wobei der Abstandssensor (20, 100) Folgendes umfasst:
eine Lichtquelle (110);
eine Abtastvorrichtung (120), die einen Motor (122) und einen Spiegel (126) umfasst, der an dem Motor (122) angebracht und dazu strukturiert ist, emittiertes Licht der Lichtquelle (110) zu reflektieren, wobei die Abtastvorrichtung (120) so strukturiert ist, dass Sondenlicht (L2), das von dem Spiegel reflektiertes Licht ist, gemäß einer Drehung des Motors (122) abgetastet werden kann;
einen Fotosensor (130), der dazu strukturiert ist, Rücklicht (L3) zu detektieren, das das Sondenlicht (L2) ist, das von einem Punkt (P) auf einem Objekt (OBJ) reflektiert wird; und
einen Prozessor (140), der dazu strukturiert ist, einen Abstand zu dem Punkt (P) auf dem Objekt (OBJ) basierend auf einer Ausgabe des Fotosensors (130) zu detektieren.

3. Objektidentifikationssystem (10) nach Anspruch 1 oder 2, wobei der Klassifizierer (42) ein neuronales Netzwerk umfasst.

4. Kraftfahrzeug (300), das das Objektidentifikationssystem (10) nach einem der Ansprüche 1 bis 3 umfasst.

5. Kraftfahrzeug (300) nach Anspruch 4, wobei der Abstandssensor (20) in einen Scheinwerfer (302) eingebaut ist.

6. Kraftfahrzeugleuchte (200), die das Objektidentifikationssystem (400) nach einem der Ansprüche 1 bis 3 umfasst.

7. Verfahren für einen Klassifizierer, der dazu strukturiert ist, eine Art eines Objekts basierend auf einem einzelnen Element aus Punktwolkendaten zu identifizieren, das einer einzelnen Abtastlinie entspricht, die durch einen Abstandssensor erfasst wurde,
wobei das Verfahren Folgendes umfasst:
Messen eines vorbestimmten Objekts unter Verwendung einer Lichtdetektion und Entfernungsmessung, LiDAR, die als eine Komponente strukturiert ist, die sich von dem Abstandssensor unterscheidet, und dazu strukturiert ist, mehrere Abtastlinien mit unterschiedlichen Höhen zu unterstützen;
Ausführen von maschinellem Lernen mit mehreren Elementen aus Punktwolkendaten, die den mehreren Abtastlinien entsprechen, als Trainingsdaten, um zu ermöglichen, dass das Objekt identifiziert wird; und
Implementieren des Klassifizierers basierend auf einem durch das maschinelle Lernen erzeugten gelernten Modell.

8. Verarbeitungsvorrichtung (40) für das Objektidentifikationssystem (10) nach einem der vorhergehenden Ansprüche 1-3, die einen Klassifizierer (42) umfasst, der dazu strukturiert ist, das einzelne Element aus Punktwolkendaten zu empfangen, das der einzelnen Abtastlinie entspricht, die durch den Abstandssensor (20) erfasst wurde,
wobei der Klassifizierer (42) basierend auf einem durch maschinelles Lernen erzeugten gelernten Modell implementiert wird,
und wobei das maschinelle Lernen unter Verwendung mehrerer Elemente aus Punktwolkendaten ausgeführt wird, die mehreren Abtastlinien entsprechen, die durch Messen eines vorbestimmten Objekts mittels einer Lichtdetektion und Entfernungsmessung, LiDAR, erhalten werden, die mehrere Abtastlinien mit unterschiedlichen Höhen unterstützt, wobei sich die LiDAR von dem Abstandssensor (20) unterscheidet.

## Revendications

1. Système d'identification d'objet (10) destiné à être monté sur un véhicule, comprenant :
un capteur de distance (20) structuré pour balayer un faisceau unique dans une direction horizontale afin de mesurer des distances par rapport à des points sur une surface d'un objet (OBJ) et de générer un élément unique de données de nuage de points, PCD, qui correspond à une ligne de balayage unique ; et
un dispositif de traitement (40) comprenant un classificateur (42) structuré pour identifier un type de l'objet (OBJ) sur la base de l'élément unique de données de nuage de points qui correspond à la ligne de balayage unique générée par le capteur de distance (20),
dans lequel le classificateur (42) est mis en œuvre sur la base d'un modèle appris généré par apprentissage automatique,
et dans lequel l'apprentissage automatique est exécuté en utilisant une pluralité d'éléments de données de nuage de points qui correspondent à une pluralité de lignes de balayage obtenues en mesurant un objet prédéterminé au moyen d'un système de détection et de télémétrie par ondes lumineuses, LiDAR (72), supportant une pluralité de lignes de balayage ayant des hauteurs différentes,
le LiDAR étant différent du capteur de distance (20).

2. Système d'identification d'objet (10) selon la revendication 1, dans lequel le capteur de distance (20,100) comprend :
une source lumineuse (110) ;
un dispositif de balayage (120) comprenant un moteur (122) et un miroir (126) fixé au moteur (122) et structuré pour réfléchir la lumière émise de la source lumineuse (110), dans lequel le dispositif de balayage (120) est structuré de sorte qu'une lumière de sonde (L2), qui est une lumière réfléchie par le miroir, puisse être balayée selon une rotation du moteur (122) ;
un photocapteur (130) structuré pour détecter une lumière de retour (L3), qui est la lumière de sonde (L2) réfléchie par un point (P) sur un objet (OBJ) ; et
un processeur (140) structuré pour détecter une distance par rapport au point (P) sur l'objet (OBJ) sur la base d'une sortie du photocapteur (130).

3. Système d'identification d'objet (10) selon la revendication 1 ou 2, dans lequel le classificateur (42) comprend un réseau neuronal.

4. Automobile (300) comprenant le système d'identification d'objet (10) selon l'une quelconque des revendications 1 à 3.

5. Automobile (300) selon la revendication 4, dans laquelle le capteur de distance (20) est intégré à un phare (302).

6. Lampe automobile (200) comprenant le système d'identification d'objet (10) selon l'une quelconque des revendications 1 à 3.

7. Procédé pour un classificateur structuré pour identifier un type d'un objet sur la base d'un élément unique de données de nuage de points qui correspond à une ligne de balayage unique acquise par un capteur de distance,
dans lequel le procédé comprend :
la mesure d'un objet prédéterminé en utilisant un système de détection et de télémétrie par ondes lumineuses, LiDAR, structuré comme un composant qui est différent du capteur de distance et structuré pour supporter une pluralité de lignes de balayage ayant des hauteurs différentes ;
l'exécution d'un apprentissage automatique avec une pluralité d'éléments de données de nuage de points qui correspondent à la pluralité de lignes de balayage comme données d'entraînement, de manière à permettre l'identification de l'objet ; et
la mise en œuvre du classificateur sur la base d'un modèle appris généré par l'apprentissage automatique.

8. Dispositif de traitement (40) pour le système d'identification d'objet (10) de l'une des revendications précédentes 1 à 3 comprenant un classificateur (42) structuré pour recevoir l'élément unique de données de nuage de points qui correspond à la ligne de balayage unique acquise par le capteur de distance (20),
dans lequel le classificateur (42) est mis en œuvre sur la base d'un modèle appris généré par l'apprentissage automatique,
et dans lequel l'apprentissage automatique est exécuté en utilisant une pluralité d'éléments de données de nuage de points qui correspondent à une pluralité de lignes de balayage obtenues en mesurant un objet prédéterminé au moyen d'un système de détection et de télémétrie par ondes lumineuses, LiDAR, qui supporte une pluralité de lignes de balayage ayant des hauteurs différentes,
le LiDAR étant différent du capteur de distance (20).
